# EUROPÄISCHE PATENTSCHRIFT

(11) **EP 3 600 735 B1**
(45) Veröffentlichungstag und Bekanntmachung des Hinweises auf die Patenterteilung: **24.05.2023**
(21) Anmeldenummer: 18713220.4
(22) Anmeldetag: 23.03.2018
(51) Int. Cl.: B23B 31/08, B23C 3/12

(54) **VERFAHREN MIT EINEM BEARBEITUNGSSYSTEM MIT EINEM DOPPELWERKZEUG UND EINER FEDERHALTERUNG**
METHOD WITH MACHINING SYSTEM, HAVING A DOUBLE TOOL AND A SPRING RETAINER
PROCÉDÉ AVEC SYSTÈME D'USINAGE AU MOYEN D'UN OUTIL DOUBLE ET SUPPORT DE RESSORT

(30) Priorität: 23.03.2017 DE 102017204892
(43) Veröffentlichungstag der Anmeldung: 05.02.2020
(73) Patentinhaber: FELSOMAT GmbH & Co. KG, 75203 Königsbach-Stein (DE)
(72) Erfinder: THIJSSEN, Johan, 3740 Bilzen (BE); PESCHINA, Jürgen, 75438 Knittlingen (DE)
(74) Vertreter: Kohler Schmid Möbus Patentanwälte
(86) Internationale Anmeldenummer: PCT/EP2018/057428
(87) Internationale Veröffentlichungsnummer: WO 2018/172517

(56) Entgegenhaltungen:
- EP-A1- 2 151 294
- EP-A2- 0 095 240
- DE-A1- 10 309 116
- DE-A1-102008 056 682
- DE-A1-102013 111 941
- US-A1- 2004 060 180

## Beschreibung

Die Erfindung betrifft ein Verfahren gemäß dem Oberbegriff des Patentanspruchs 1, zur Bearbeitung eines Werkstücks mit einem Bearbeitungssystem, mit dem Bearbeitungssystem umfassend ein um eine Werkzeugachse rotierbares Werkzeug, das eine erste Bearbeitungszone für eine erste Bearbeitungsart aufweist, wobei die erste Bearbeitungszone so an dem Werkzeug ausgerichtet ist, dass bei einer Bearbeitung eines Werkstücks mit der ersten Bearbeitungszone eine auf das Werkzeug wirkende erste Prozesskraft der ersten Bearbeitungsart eine erste Komponente aufweist, die parallel zu der Werkzeugachse in einer Hauptrichtung wirkt. Die Erfindung betrifft weiterhin die Verwendung eines Bearbeitungssystems in einem solchen Verfahren.

Ein solches Bearbeitungssystem ist aus der DE 10 2014 218 082 A1 bekannt geworden.

Bei der Herstellung von verzahnten Werkstücken, beispielsweise Zahnrädern, werden üblicherweise Fasen an Zahnkanten von Zähnen des verzahnten Werkstücks angebracht. Diese Fasen können mittels spanender oder umformender Verfahren gefertigt werden. Dabei entstehen jedoch Grate bzw. Materialaufwerfungen, die in einem weiteren Fertigungsschritt entfernt werden müssen.

Die oben genannte DE 10 2014 218 082 A1 beschreibt ein Verfahren zur spanenden Fertigung von Fasen an Zahnkanten. Bei diesem Verfahren wird ein verzahntes Werkzeug um eine Werkzeugachse rotiert, wobei die Werkzeugachse um einen Azimutwinkel ϕ und einen Breitenwinkel γ gegenüber einer Werkstückachse des verzahnten Werkstücks verschwenkt ist, so dass eine Schneidkante eines Werkzeugzahns an der Zahnkante abgleitet und eine Fase an dem verzahnten Werkstück gefertigt wird. Dieses Verfahren ähnelt dem bekannten Wälzschälen (es zeichnet sich gegenüber dem Wälzschälen insbesondere durch die zusätzliche Verschwenkung der Werkzeugachse um den Breitenwinkel aus) und wird daher auch als Wälzschälanfasen bezeichnet.

Je nach Schnittrichtung entsteht dabei ein Grat entweder an einer Zahnflanke eines Zahns (beim Anfasen von außen nach innen, d.h. Schnittrichtung von einer Stirnseite in Richtung Zahnflanke) oder an einer Stirnseite (beim Anfasen von innen nach außen, d.h. Schnittrichtung von der Zahnflanke in Richtung Stirnseite).

Es ist grundsätzlich bekannt, einen beim Anfasen einer Zahnkante entstandenen Grat an einer Stirnseite des verzahnten Werkstücks mit einem Feilwerkzeug abzutragen. Das Feilwerkzeug muss zusätzlich zu einem Anfaswerkzeug bereitgestellt und eingesetzt werden. Dazu ist weiterhin eine zur Feilbearbeitung geeignete Werkzeugmaschine erforderlich, ggf. muss zudem das verzahnte Werkstück umgespannt werden. Dies führt insgesamt zu einem großen fertigungstechnischen Aufwand.

Zum maschinellen Gewindeschneiden sind Werkzeughalter bekannt, bei denen ein Gewindeschneidwerkzeug aus einer Ruhelage heraus entlang der Gewindeachse in beide Richtungen gegen die Wirkung einer Feder verschieblich am Werkzeughalter gelagert ist. Durch Verschiebungen aus der Ruhelage des Gewindeschneidwerkzeugs heraus kann das Gewindeschneidwerkzeug der durch eine Werkzeugdrehzahl und die Gewindesteigung bestimmten geometrischen Vorschubgeschwindigkeit folgen, auch wenn eine maschinelle Vorschubgeschwindigkeit an dem Werkzeughalter geringfügig von der geometrischen Vorschubgeschwindigkeit abweicht, d.h. wenn die maschinelle Vorschubgeschwindigkeit größer oder kleiner ist als die geometrische Vorschubgeschwindigkeit.

Die DE 10 2008 056 682 A1 beschreibt ein Verfahren gemäß dem Oberbegriff des Patentanspruchs 1 und ein Fräs- und Entgratwerkzeug, wobei ein Fräskopf sich axial in Richtung seiner Drehachse bewegen kann. Der Der Fräskopf ist axial gefedert gelagert. Mittels eines Anschlags ist die Hubhöhe festgelegt, um die der Fräskopf axial ausweichen kann, etwa um Unebenheiten des Werkstücks auszugleichen.

Aus der DE 103 09 116 A1 ist ein Kombinationswerkzeug bekannt geworden, bei dem ein Entgratwerkzeug axial nachgiebig gelagert ist.

### Aufgabe der Erfindung

Der Erfindung liegt die Aufgabe zugrunde, ein Verfahren zur Bearbeitung eines Werkzeugs mit einem Bearbeitungssystem und eine Verwendung eines Bearbeitungssystems anzugeben, die ein einfaches und kostengünstiges Bearbeiten von Werkstücken mit zwei unterschiedlichen Bearbeitungsarten erlauben.

### Kurze Beschreibung der Erfindung

Diese Aufgabe wird gelöst durch ein Verfahren gemäß dem Patentanspruch 1, zur Bearbeitung eines Werkstücks mit einem Bearbeitungssystem, mit dem Bearbeitungssystem umfassend ein um eine Werkzeugachse rotierbares Werkzeug, das eine erste Bearbeitungszone für eine erste Bearbeitungsart aufweist,
wobei die erste Bearbeitungszone so an dem Werkzeug ausgerichtet ist, dass bei einer Bearbeitung eines Werkstücks mit der ersten Bearbeitungszone eine auf das Werkzeug wirkende erste Prozesskraft der ersten Bearbeitungsart eine erste Komponente aufweist, die parallel zu der Werkzeugachse in einer Hauptrichtung wirkt,
wobei das Werkzeug als ein Doppelwerkzeug ausgebildet ist, das weiterhin eine zweite Bearbeitungszone für eine zweite Bearbeitungsart aufweist,
wobei die zweite Bearbeitungszone so an dem Werkzeug ausgerichtet ist, dass bei einer Bearbeitung eines Werkstücks mit der zweiten Bearbeitungszone eine auf das Werkzeug wirkende zweite Prozesskraft der zweiten Bearbeitungsart eine zweite Komponente aufweist, die parallel zu der Werkzeugachse entgegen der Hauptrichtung wirkt,
wobei das Bearbeitungssystem weiterhin eine Federhalterung umfasst,
dass die Federhalterung einen Grundkörper und einen Aufnahmekörper aufweist,
wobei das Werkzeug unmittelbar oder mittelbar an dem Aufnahmekörper der Federhalterung befestigt ist,
wobei der Grundkörper und der Aufnahmekörper entlang der Werkzeugachse gegeneinander verschieblich sind,
wobei ein Hauptanschlag an dem Grundkörper vorgesehen ist, der ein Verschieben des Aufnahmekörpers gegen den Grundkörper in der Hauptrichtung begrenzt,
und wobei der Aufnahmekörper von einem Federelement der Federhalterung gegen den Hauptanschlag vorgespannt ist und entgegen der Federkraft des Federelements von dem Hauptanschlag entgegen der Hauptrichtung abhebbar ist,
wobei in einem ersten Schritt das Werkstück mit der ersten Bearbeitungszone bearbeitet wird, wobei die erste Komponente der ersten Prozesskraft der ersten Bearbeitungsart den Aufnahmekörper zusätzlich zu der Federkraft gegen den Hauptanschlag des Grundkörpers presst, und dass in einem zweiten Schritt das Werkstück mit der zweiten Bearbeitungszone bearbeitet wird, wobei der Aufnahmekörper von dem Hauptanschlag des Grundkörpers abgehoben ist, so dass das Werkzeug von der Federkraft des Federelements gegen das Werkstück gepresst wird.

Die Aufgabe wird weiterhin gelöst durch die Verwendung dieses Bearbeitungssystems in dem oben angegebenen, erfindungsgemäßen Verfahren. Diese Verwendung ist in Anspruch 3 definiert.

Dieses Verfahren und diese Verwendung dieses Bearbeitungssystems erlauben auf einfache und kostengünstige Weise ein Werkstück mit der ersten und der zweiten Bearbeitungsart zu bearbeiten. Erfindungsgemäß wird dazu zunächst das Werkstück mit der ersten Bearbeitungszone bearbeitet. Sodann wird das Werkzeug derart relativ zum Werkstück ausgerichtet, dass eine Bearbeitung mit der zweiten Bearbeitungszone erfolgen kann. Vorzugsweise wird dasselbe Werkstück mit der ersten und der zweiten Bearbeitungszone in einer Aufspannung bearbeitet, um die Fertigungspräzision weiter zu erhöhen und die Fertigungszeit zu senken. Die Bearbeitung mit der ersten und zweiten Bearbeitungsart kann auf einer Werkzeugmaschine mit nur einer Werkzeugspindel erfolgen, insbesondere ohne das Werkzeug umzuspannen.

Das Werkzeug wird grundsätzlich zur Bearbeitung mit der ersten und mit der zweiten Bearbeitungsart um die Werkzeugachse rotiert. Typischerweise wird auch das Werkstück um eine Werkstückachse rotiert. Die erste und/oder die zweite Bearbeitungsart sind vorzugsweise zerspanende Fertigungsverfahren. Besonders bevorzugt sind die erste und/oder die zweite Bearbeitungsart zerspanende Fertigungsverfahren mit geometrisch bestimmter Schneide. Insbesondere die zweite Bearbeitungsart kann vorteilhafterweise auch ein zerspanendes Fertigungsverfahren mit geometrisch unbestimmter Schneide sein, beispielsweise Schleifen. Insbesondere die erste Bearbeitungsart kann alternativ auch ein umformendes Bearbeitungsverfahren sein.

Durch den Hauptanschlag wirkt die Federhalterung in der Hauptrichtung steif (starr). Die erste Komponente der ersten Prozesskraft drückt den Aufnahmekörper zusätzlich zu der Federkraft des Federelements gegen den Hauptanschlag. Durch die große axiale Steifigkeit in der Hauptrichtung aufgrund des Hauptanschlags wird ein definiertes Eindringen des Werkzeugs in ein zu bearbeitendes Werkstück bei Bearbeitung mit der ersten Bearbeitungszone ermöglicht. Die erste Bearbeitungsart kann beispielsweise Fräsen oder Wälzfräsen oder Wälzschälanfasen (siehe unten) oder auch drückendes Anfasen sein.

Indem der Aufnahmekörper gegen die Wirkung der Federkraft (d.h. entgegen der Hauptrichtung) von dem Hauptanschlag abgehoben werden kann, kann eine Bearbeitung des Werkstücks mit der zweiten Bearbeitungszone unter federnder Anlage der zweiten Bearbeitungszone des Werkzeugs an dem Werkstück erfolgen. Eine Anpresskraft der zweiten Bearbeitungszone gegen das Werkstück kann durch eine Vorspannung des Federelements beeinflusst werden.

Eine federnde Anlage ist insbesondere nützlich bzw. erforderlich, wenn die Position der zu bearbeitenden Oberfläche nicht präzise bekannt ist, etwa weil zu bearbeitende Werkstücke in ihrer Dicke schwanken. So weisen in der Praxis beispielsweise Zahnräder (z.B. für Fahrzeuggetriebe) häufig Dicken auf, die im Vergleich von mehreren (ansonsten gleichartigen) Zahnrädern im Bereich einiger Zehntelmillimeter variieren. Durch die federnde Anlage wird sichergestellt, dass unabhängig von der Dicke des jeweiligen zu bearbeitenden Werkstücks die zweite Bearbeitungszone mit einer im Wesentlichen konstanten Kraft gegen die Oberfläche des Werkstücks gepresst wird. Eine Zustellung des Doppelwerkzeugs erfolgt dabei typischerweise derart, dass bei einer nominellen Dicke des Werkstücks der Aufnahmekörper um ca. die Hälfte eines maximalen Ausrückwegs von dem Hauptanschlag abgehoben ist. Gegenüber einer rein weggesteuerten Zustellung der zweiten Bearbeitungszone ohne Ausgleichsmöglichkeit über ein Federelement wird dadurch vermieden, dass bei einer geringen Dicke des Werkstücks die zweite Bearbeitungszone nicht oder zu schwach an das Werkstück angepresst wird, oder dass bei einer größeren Dicke des Werkstücks die zweite Bearbeitungszone übermäßig weit in das Werkstück eindringt. Die zweite Bearbeitungsart kann insbesondere Feilen sein.

Das Federelement ist vorzugsweise eine Schraubenfeder, besonders bevorzugt eine zylindrische Schraubenfeder. Alternativ kann beispielsweise ein Gasfederelement oder ein Gummifederelement vorgesehen sein.

Indem das Werkzeug an dem Aufnahmekörper befestigt ist, kann es entlang der Werkzeugachse gegen den Grundkörper verschoben werden. Zur unmittelbaren Befestigung kann das Werkzeug beispielsweise mit dem Aufnahmekörper verschraubt werden und direkt an diesem anliegen. Der Grundkörper der Federhalterung ist dann typischerweise an einer antreibbaren Welle einer Werkzeugspindel befestigt. Zur mittelbaren Befestigung kann ein Adapter zwischen dem Werkzeug und dem Aufnahmekörper verwendet werden. Bei einer mittelbaren Befestigung kann vorteilhafterweise auch vorgesehen sein, dass ein Spindelgehäuse einer Werkzeugspindel an dem Aufnahmekörper befestigt ist und dass das Werkzeug an einer antreibbaren Welle der Werkzeugspindel befestigt ist.

Der Grundkörper und der Aufnahmekörper sind in der Regel drehfest aneinander geführt. Alternativ kann ein rotatorischer Freiheitsgrad um die Werkzeugachse eingerichtet sein, insbesondere in Verbindung mit einer Drehmomentbegrenzung. Vorzugsweise weist der Aufnahmekörper gegenüber dem Grundkörper nur einen translatorischen Freiheitsgrad entlang der Werkzeugachse auf.

Gemäß dem erfindungsgemäßen Verfahren kann das Werkstück schnell und effizient mit der ersten und der zweiten Bearbeitungsart bearbeitet werden. Bei der Bearbeitung mit der ersten Bearbeitungszone liegt der Aufnahmekörper an dem Hauptanschlag an, so dass ein definiertes Eindringen des Werkzeugs in das Werkstück ermöglicht wird. Bei der Bearbeitung mit der zweiten Bearbeitungszone liegt der Aufnahmekörper nicht an dem Hauptanschlag und grundsätzlich auch nicht an einem Hilfsanschlag an. Bei der Bearbeitung des Werkstücks mit der zweiten Bearbeitungsart in dem zweiten Schritt entspricht eine entgegen der Hauptrichtung wirkende zweite Komponente einer zweiten Prozesskraft betragsmäßig der Federkraft des Federelements. Die erste und/oder die zweite Prozesskraft sind typischerweise Zerspankräfte. Vorzugsweise erfolgt die Bearbeitung des Werkstücks in dem ersten und dem zweiten Schritt in einer Aufspannung (d.h. ohne das Werkstück umzuspannen). Vorzugsweise wird mit dem Werkzeug zunächst ein Werkstück mit beiden Bearbeitungszonen nacheinander bearbeitet, und dann zu einem nächsten Werkstück gewechselt, und so fort; d.h. die Schritte 1 und 2 erfolgen nacheinander am selben Werkstück, bevor zum nächsten Werkstück gewechselt wird. Das Werkzeug wird zwischen dem ersten und dem zweiten Schritt und auch zwischen der Bearbeitung verschiedener Werkstücke grundsätzlich nicht von der Federhalterung oder von einer Werkzeugspindel gelöst.

### Bevorzugte Variante des erfindungsgemäßen Verfahrens

Bei einer besonders bevorzugten Verfahrensvariante ist vorgesehen, dass die erste Bearbeitungsart Wälzschälanfasen ist, und dass die zweite Bearbeitungsart Feilen ist. Auf diese Weise kann ein verzahntes Werkstück, beispielsweise ein Zahnrad, insbesondere ein Stirnrad, schnell und kostengünstig an Zahnkanten seiner Zähne angefast und anschließend entgratet werden. Vorzugsweise werden zunächst alle Zähne des verzahnten Werkstücks in dem ersten Schritt mit der ersten Bearbeitungszone an jeweils zumindest einer Zahnkante angefast, insbesondere durch Wälzschälanfasen von innen nach außen (von der Zahnflanke in Richtung Stirnseite), und sodann wird eine Stirnseite des verzahnten Werkstücks mit der zweiten Bearbeitungszone überfeilt, um Grate an den Zahnkanten zu entfernen. Das Wälzschälanfasen kann wie in der (oben bereits diskutierten) DE 10 2014 218 082 A1 beschrieben erfolgen, auf deren Inhalt hier vollumfänglich Bezug genommen wird. Beim Wälzschälanfasen in dem ersten Schritt rotieren das Werkzeug und das Werkstück grundsätzlich synchron, so dass jeweils ein Zahn des Werkzeugs, der eine Schneide zum Anfasen aufweist, mit einem anzufasenden Zahn des Werkstücks kämmt. Um beim Feilen in dem zweiten Schritt eine Schnittgeschwindigkeit zu erzeugen, rotieren das Werkzeug und das Werkstück grundsätzlich mit unterschiedlichen Geschwindigkeiten. Beispielsweise kann das Werkzeug um 100 Umdrehungen pro Minute schneller rotieren als das Werkstück, oder umgekehrt. Typischerweise rotiert das Werkzeug dabei gleichsinnig mit dem Werkstück. In Sonderfällen können Werkstück und Werkzeug beim Feilen gegenläufig zueinander rotieren.

### Bevorzugte Varianten der erfindungsgemäßen Verwendung

Bei einer vorteilhaften Variante der erfindungsgemäßen Verwendung ist vorgesehen, dass die erste Bearbeitungszone an einer Werkzeugvorderseite ausgebildet ist, so dass bei einer Bearbeitung eines Werkstücks mit der ersten Bearbeitungszone der Aufnahmekörper von dem Werkzeug zu dem Hauptanschlag hin gedrückt wird,
und dass die zweite Bearbeitungszone an einer Werkzeugrückseite ausgebildet ist, so dass bei einer Bearbeitung eines Werkstücks mit der zweiten Bearbeitungszone der Aufnahmekörper von dem Werkzeug von dem Hauptanschlag weg gezogen wird. Dadurch kann eine besonders hohe axiale Steifigkeit der Federhalterung in der Hauptrichtung erhalten werden. Zudem kann die Federhalterung besonders kompakt ausgeführt werden. Das Werkzeug weist typischerweise einen im Wesentlichen scheibenförmigen Werkzeugkörper mit den beiden Bearbeitungszonen auf. Die erste Bearbeitungszone erstreckt sich bevorzugt orthogonal zu der Werkzeugachse. Die zweite Bearbeitungszone kann vorteilhafterweise einen Winkel zwischen 40° und 65° mit der Werkzeugachse einschließen. Die Werkzeugvorderseite liegt typischerweise abgewandt zur Federhalterung bzw. abgewandt zu einer Welle einer Werkzeugspindel, mit der das Werkzeug drehbar ist.

Eine vorteilhafte Variante ist dadurch gekennzeichnet, dass ein Hilfsanschlag vorgesehen ist, der einen Ausrückweg des Aufnahmekörpers von dem Hauptanschlag des Grundkörpers weg begrenzt. Dadurch wird die Betriebssicherheit des Bearbeitungssystems erhöht. Ein übermäßig weites Abheben des Aufnahmekörpers von dem Hauptanschlag weg wird durch den Hilfsanschlag verhindert. Die von dem Federelement auf den Aufnahmekörper ausgeübte Federkraft nimmt vorzugsweise um höchstens 20 %, besonders bevorzugt höchstens 10 %, zu, wenn der Grundkörper von dem Hauptanschlag zu dem Hilfsanschlag verschoben wird. Der Ausrückweg kann vorzugsweise auf 1,0 mm oder weniger, 1,5 mm oder weniger, oder auch 2 mm oder weniger begrenzt sein. Bevorzugt beträgt der Ausrückweg auch 0,5 mm oder mehr, oder 1,0 mm oder mehr, oder auch 1,5 mm oder mehr.

Bei einer besonders bevorzugter Variante ist vorgesehen, dass die erste Bearbeitungszone erste Schneiden zum Wälzschälanfasen aufweist, und dass die zweite Bearbeitungszone zweite Schneiden zum Feilen aufweist. Dadurch können verzahnte Werkstücke, etwa Zahnräder, insbesondere Stirnräder, auf besonders effiziente Weise gefertigt werden. Mit dem Werkzeug kann zunächst eine Fase an einer Zahnkante gefertigt werden (typischerweise mit Schnitt von innen nach außen, d.h. von einer Zahnflanke in Richtung auf eine Stirnseite zu), sodann kann der dabei entstandene Grat abgefeilt werden. Zum Wälzschälanfasen weist das Werkzeug grundsätzlich Werkzeugzähne auf, an denen in der ersten Bearbeitungszone die ersten Schneiden zum Wälzschälanfasen ausgebildet sind. Die zweiten Schneiden zum Feilen sind vorzugsweise den ersten Schneiden abgewandt an den Werkzeugzähnen ausgebildet. Alternativ kann die zweite Bearbeitungszone unabhängig von den Werkzeugzähnen der ersten Bearbeitungszone ausgebildet sein.

Eine besonders vorteilhafte Variante ist dadurch gekennzeichnet, dass wenigstens drei geradlinige Wälzkörperreihen mit je einer Mehrzahl von Wälzkörpern, insbesondere Lagerkugeln, vorgesehen sind, um den Aufnahmekörper an dem Grundkörper zu führen. Durch die wenigstens drei Wälzkörperreihen kann eine reibungsarme, spielfreie und drehsteife Führung des Aufnahmekörpers an dem Grundkörper erreicht werden. Eine Relativbewegung von Grundkörper und Aufnahmekörper ist nur entlang der Werkzeugachse möglich; insbesondere wird eine Beweglichkeit in radialer Richtung, ein Verdrehen um die Werkzeugachse und ein Verkippen des Aufnahmekörpers gegen den Grundkörper verhindert. Die Wälzkörperreihen sind typischerweise jeweils in radialer Richtung zwischen dem Aufnahmekörper und dem Grundkörper angeordnet, und ragen radial sowohl in den Grundkörper als auch in den Aufnahmekörper hinein. Die Wälzkörper der Wälzkörperreihen sind vorzugsweise zwischen ihren jeweiligen Laufflächen an dem Grundkörper und an dem Aufnahmekörper verspannt, um die Steifigkeit der Führung zu erhöhen. Die Wälzkörperreihen erstrecken sich grundsätzlich parallel zu der Werkzeugachse.

Bei einer bevorzugten Weiterentwicklung dieser Variante ist vorgesehen, dass für jede der Wälzkörperreihen an dem Grundkörper und an dem Aufnahmekörper jeweils zwei Laufflächen ausgebildet sind. Dadurch kann die Steifigkeit der Führung, insbesondere im Hinblick auf ein Verdrehen des Aufnahmekörpers gegen den Grundkörper um die Werkzeugachse, weiter erhöht werden. Die Laufflächen können eben (als Laufebenen) oder bevorzugt gekrümmt (als Laufbahnen) ausgebildet sein, insbesondere entsprechend der Gestaltung eines Kugellagers mit Druckwinkel 45°. Paarweise gegenüberliegende Laufflächen des Grundkörpers und des Aufnahmekörpers schließen mit einer zur Werkzeugachse radialen Richtung vorzugsweise jeweils betragsmäßig gleiche Winkel, besonders bevorzugt von näherungsweise 45° (z.B. plus/minus 5°), ein.

Eine vorteilhafte Variante sieht vor, dass das Werkzeug in einer feststehenden Drehstellung an dem Aufnahmekörper befestigt ist. Das Bearbeitungssystem kann dadurch besonders kompakt und steif aufgebaut werden. Die Federhalterung und das Werkzeug sind mithin gemeinsam um die Werkzeugachse rotierbar. Dazu wird der Grundkörper der Federhalterung bei dieser Variante typischerweise an einer antreibbaren Welle einer Werkzeugspindel befestigt. Man beachte, dass bei einer Demontage und erneuten Montage des Werkzeugs an dem Aufnahmekörper die Drehstellung veränderbar sein kann, typischerweise in gleichen Teilschritten einer vollen Umdrehung, z.B. in 60°-Schritten.

### Verwendungsvarianten betreffend Federhalterungen

Bevorzugt ist eine Variante der Verwendung gemäß der vorliegenden Erfindung, insbesondere wobei der Grundkörper der Federhalterung in einer feststehenden Drehstellung an einer Welle einer Werkzeugspindel befestigt ist,
wobei der Aufnahmekörper eine Werkzeugaufnahme zur Befestigung eines Werkzeugs an dem Aufnahmekörper aufweist,
und wobei der Grundkörper eine Wellenaufnahme zur Befestigung des Grundkörpers an einer Welle einer Werkzeugspindel aufweist. Die Federhalterung des verwendeten Bearbeitungssystems erlaubt es auf einfache Weise, eine Werkzeugmaschine zu ertüchtigen für die erste Bearbeitungsart mit definiertem Eindringen eines Werkzeugs in ein Werkstück bei Anlage des Aufnahmekörpers an dem Hauptanschlag und für die zweite Bearbeitungsart mit federnder Anpressung des Werkzeugs gegen das Werkstück bei von dem Hauptanschlag abgehobenem Aufnahmekörper. Der Aufnahmekörper kann entgegen der Hauptrichtung von dem Hauptanschlag an dem Grundkörper abgehoben werden, wobei typischerweise die Werkzeugaufnahme von der Wellenaufnahme entfernt wird. Bei einem Verschieben des Aufnahmekörpers gegen den Grundkörper in der Hauptrichtung wird typischerweise die Werkzeugaufnahme der Wellenaufnahme angenähert.

Eine vorteilhafte Weiterbildung dieser Variante sieht vor, dass der Grundkörper der Federhalterung eine Rücknehmung aufweist, die in einer zur Werkzeugachse radialen Richtung von einem Mantelabschnitt begrenzt wird, und die in der Hauptrichtung zumindest teilweise von einem Bodenabschnitt begrenzt wird, und dass der Aufnahmekörper der Federhalterung in die Rücknehmung des Grundkörpers eingesetzt ist. Dadurch wird ein besonders kompakter und steifer Aufbau der Federhalterung ermöglicht. Der Grundkörper ist hier im Wesentlichen topfförmig ausgebildet. Der Mantelabschnitt umgreift die Rücknehmung in Umfangsrichtung typischerweise vollständig. Der Bodenabschnitt kann Ausnehmungen/Durchbrüche aufweisen, insbesondere zum Durchführen und/oder Befestigen von weiteren Bauteilen. Der Hauptanschlag ist vorzugsweise an dem Bodenabschnitt des Grundkörpers ausgebildet. Alternativ kann der Hauptanschlag an einer freien Stirnfläche des Mantelabschnitts ausgebildet sein. Der Aufnahmekörper ist in seiner Grundposition, in der er am Hauptanschlag anliegt, vorzugsweise vollständig innerhalb der Rücknehmung angeordnet, d.h. er ragt nicht über die freie Stirnfläche des Mantelabschnitts hinaus.

Bei einer bevorzugten Weiterentwicklung ist vorgesehen, dass der Grundkörper der Federhalterung einen Dorn umfasst, dass der Dorn eine, insbesondere zentrale, Ausnehmung des Aufnahmekörpers der Federhalterung durchragt, und dass das Federelement sich an dem Dorn und an dem Aufnahmekörper abstützt. Dadurch kann das Federelement platzsparend innerhalb der Federhalterung angeordnet werden. Der Dorn ist vorzugsweise mit einem Grundelement des Grundkörpers verschraubt. Das Federelement ist vorzugsweise durch eine Druckfeder gebildet. Der Dorn kann zur Abstützung des Federelements einen (radialen) Kragen aufweisen.

Eine besonders bevorzugte Untervariante dieser Weiterentwicklung ist dadurch gekennzeichnet, dass an dem Dorn ein Hilfsanschlag ausgebildet ist, der einen Ausrückweg des Aufnahmekörpers von dem Hauptanschlag des Grundkörpers weg begrenzt. Der Hilfsanschlag verhindert ein übermäßig weites Abheben des Aufnahmekörpers von dem Hauptanschlag weg. Bevorzugt weist der Dorn eine radiale Schulter auf, die den Hilfsanschlag bildet. Die von dem Federelement auf den Aufnahmekörper ausgeübte Federkraft nimmt vorzugsweise um höchstens 20 %, besonders bevorzugt höchstens 10 %, zu, wenn der Grundkörper von dem Hauptanschlag zu dem Hilfsanschlag verschoben wird. Wenn das Federelement eine lineare Feder ist, ist diese mithin bei am Hauptanschlag anliegendem Aufnahmekörper um das 5-fache bzw. 10-fache des Ausrückwegs des Aufnahmekörpers von dem Hauptanschlag bis zum Hilfsanschlag vorgespannt. Der Ausrückweg kann vorzugsweise auf 1,0 mm oder weniger, 1,5 mm oder weniger, oder auch 2 mm oder weniger begrenzt sein. Der Ausrückweg beträgt bevorzugt auch 0,5 mm oder mehr, oder 1,0 mm oder mehr, oder auch 1,5 mm oder mehr.

Bei einer besonders bevorzugten Weiterentwicklung ist vorgesehen, dass der Aufnahmekörper der Federhalterung eine Rücknehmung aufweist, die in einer zur Werkzeugachse radialen Richtung von einem Mantelabschnitt begrenzt wird, und die entgegen der Hauptrichtung zumindest teilweise von einem Bodenabschnitt begrenzt wird, und dass der Grundkörper der Federhalterung in die Rücknehmung des Aufnahmekörpers eingesetzt ist. Der Aufnahmekörper ist mithin im Wesentlichen topfförmig ausgebildet. Dadurch wird ein besonders kompakter und steiferAufbau der Federhalterung ermöglicht. Der Mantelabschnitt umgreift die Rücknehmung in Umfangsrichtung typischerweise vollständig. Der Bodenabschnitt kann Ausnehmungen/Durchbrüche aufweisen, insbesondere zum Durchführen und/oder Befestigen von weiteren Bauteilen. Der Hauptanschlag ist vorzugsweise an einer Stirnfläche des Grundkörpers ausgebildet.

Eine vorteilhafte Weiterentwicklung ist dadurch gekennzeichnet, dass der Aufnahmekörper der Federhalterung einen Dorn umfasst, dass der Dorn eine, insbesondere zentrale, Ausnehmung des Grundkörpers der Federhalterung durchragt, und dass das Federelement sich an dem Dorn und an dem Grundkörper abstützt. Dadurch kann das Federelement platzsparend innerhalb der Federhalterung angeordnet werden. Der Dorn ist vorzugsweise mit einem Aufnahmeelement des Aufnahmekörpers verschraubt. Das Federelement ist vorzugsweise durch eine Druckfeder gebildet. Der Dorn kann zur Abstützung des Federelements einen (radialen) Kragen aufweisen. Vorzugsweise weist der Dorn eine radiale Schulter auf, die zur Begrenzung eines Ausrückwegs des Aufnahmekörpers von dem Hauptanschlag des Grundkörpers weg mit einem Hilfsanschlag des Grundkörpers zusammenwirken kann. Der Ausrückweg kann vorzugsweise auf 1,0 mm oder weniger, 1,5 mm oder weniger, oder auch 2 mm oder weniger begrenzt sein. Der Ausrückweg beträgt bevorzugt auch 0,5 mm oder mehr, oder 1,0 mm oder mehr, oder auch 1,5 mm oder mehr.

Bei einer besonders bevorzugten Weiterentwicklung der Federhalterung sind wenigstens drei geradlinige Wälzkörperreihen mit je einer Mehrzahl von Wälzkörpern, insbesondere Lagerkugeln, vorgesehen, um den Aufnahmekörper an dem Grundkörper zu führen. Durch wenigstens die drei Wälzkörperreihen kann eine reibungsarme, spielfreie und drehsteife Führung des Aufnahmekörpers an dem Grundkörper erreicht werden. Eine Relativbewegung von Grundkörper und Aufnahmekörper ist nur entlang der Werkzeugachse möglich; insbesondere wird eine Beweglichkeit in radialer Richtung, ein Verdrehen um die Werkzeugachse und ein Verkippen des Aufnahmekörpers gegen den Grundkörper verhindert. Die Wälzkörperreihen sind typischerweise jeweils in radialer Richtung zwischen dem Aufnahmekörper und dem Grundkörper angeordnet und ragen radial sowohl in den Grundkörper als auch in den Aufnahmekörper hinein. Die Wälzkörper der Wälzkörperreihen sind vorzugsweise zwischen ihren jeweiligen Laufflächen an dem Grundkörper und an dem Aufnahmekörper verspannt, um die Steifigkeit der Führung zu erhöhen. Die Wälzkörperreihen erstrecken sich grundsätzlich parallel zu der Werkzeugachse.

Bei einer bevorzugten Untervariante dieser Weiterentwicklung ist vorgesehen, dass für jede der Wälzkörperreihen an dem Grundkörper und an dem Aufnahmekörper jeweils zwei Laufflächen ausgebildet sind. Dadurch kann die Steifigkeit der Führung, insbesondere im Hinblick auf ein Verdrehen des Aufnahmekörpers gegen den Grundkörper um die Werkzeugachse, weiter erhöht werden. Die Laufflächen können eben (als Laufebenen) oder bevorzugt gekrümmt (als Laufbahnen) ausgebildet sein, insbesondere entsprechend der Gestaltung eines Kugellagers mit Druckwinkel 45°. Paarweise gegenüberliegende Laufflächen des Grundkörpers und des Aufnahmekörpers schließen mit einer zur Werkzeugachse radialen Richtung vorzugsweise jeweils betragsmäßig gleiche Winkel, besonders bevorzugt von näherungsweise 45° (z.B. plus/minus 5°), ein.

### Einsatz an Werkzeugmaschinen

Ein Bearbeitungssystem, das wie oben beschrieben ausgebildet ist und verwendet wird, kann Teil einer Werkzeugmaschine, insbesondere Verzahnungsmaschine, sein, wobei die Werkzeugmaschine weiterhin eine Werkzeugspindel mit einem Spindelgehäuse und mit einer antreibbaren Welle umfasst, und wobei der Grundkörper der Federhalterung in einer feststehenden Drehstellung an der Welle der Werkzeugspindel befestigt ist. Dies erlaubt eine besonders einfache Integration des Bearbeitungssystems in die Werkzeugmaschine. Ferner kann die Masse der gegen den Grundkörper verschieblichen Komponenten (gefederte Masse) klein gehalten werden; lediglich das Werkzeug, der Aufnahmekörper und ggf. Befestigungselemente sind verschieblich gelagert. Insbesondere kann eine an und für sich bekannte Werkzeugmaschine auf einfache Weise mit dem Bearbeitungssystem aufgerüstet werden. Die Federhalterung ist mittels der antreibbaren Welle der Werkzeugspindel um die Werkzeugachse rotierbar, vorzugsweise gemeinsam mit dem in einer feststehenden Drehorientierung an dem Aufnahmekörper befestigten Werkzeug. Das Spindelgehäuse ist vorzugsweise an einem Werkzeugträger der Werkzeugmaschine befestigt. Der Werkzeugträger kann typischerweise motorisch verfahren und/oder rotiert (geneigt) werden.

Ein Bearbeitungssystem (bei dem das Werkzeug nicht in einer feststehenden Drehstellung an dem Aufnahmekörper befestigt ist), das wie oben beschrieben ausgebildet ist und verwendet wird, kann Teil einer Werkzeugmaschine sein, wobei die Werkzeugmaschine weiterhin eine Werkzeugspindel mit einem Spindelgehäuse und mit einer antreibbaren Welle umfasst, und wobei das Spindelgehäuse der Werkzeugspindel in einer feststehenden Drehstellung an dem Aufnahmekörper der Federhalterung befestigt ist, und wobei das Werkzeug in einer feststehenden Drehstellung an der Welle der Werkzeugspindel befestigt ist. Die gesamte Werkzeugspindel mitsamt dem Werkzeug kann dabei entlang der Werkzeugachse verschieblich an einem Werkzeugträger der Werkzeugmaschine gelagert werden. Weiterhin wird ein Trägheitsmoment der zur Bearbeitung um die Werkzeugachse rotierten Komponenten klein gehalten, da die Federhalterung nicht mitgedreht werden muss; es drehen sich nur die Werkzeugspindel und das Werkzeug. Der Grundkörper der Federhalterung ist vorzugsweise unmittelbar an dem Werkzeugträger der Werkzeugmaschine befestigt. Der Werkzeugträger kann typischerweise motorisch verfahren und/oder rotiert (geneigt) werden. Das Werkzeug ist bei dieser Verwendung mittels der antreibbaren Welle der Werkzeugspindel gegenüber der Federhalterung um die Werkzeugachse rotierbar.

Weitere Vorteile der Erfindung ergeben sich aus der Beschreibung und der Zeichnung. Ebenso können die vorstehend genannten und die noch weiter ausgeführten Merkmale jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: einen schematischen Längsschnitt durch eine Werkzeugmaschine mit einem Bearbeitungssystem umfassend eine Federhalterung und ein an einem Aufnahmekörper der Federhalterung befestigtes Werkzeug, wobei die Federhalterung mit ihrem Grundkörper an einer antreibbaren Welle einer Werkzeugspindel befestigt ist, und wobei der Aufnahmekörper an einem Hauptanschlag anliegt, für die Erfindung;
- Fig. 2: das Bearbeitungssystem der Werkzeugmaschine von Fig. 1 in einer Querschnittsansicht bei Ebene A-A;
- Fig. 3: eine schematische Darstellung einer Wälzkörperreihe zur Führung eines Aufnahmekörpers an einem Grundkörper, mit je zwei Laufflächen für Wälzkörper an dem Aufnahmekörper und an dem Grundkörper, in Aufsicht, für die Erfindung;
- Fig. 4: die Werkzeugmaschine von Fig.1 mit von dem Hauptanschlag abgehobenem Aufnahmekörper;
- Fig. 5: eine weitere Bauform einer Werkzeugmaschine, bei der ein Werkzeug an einer Welle einer Werkzeugspindel befestigt ist, und bei der ein Spindelgehäuse der Werkzeugspindel an einem Aufnahmekörper einer Federhalterung befestigt ist, in einer schematischen Seitenansicht, für die Erfindung.

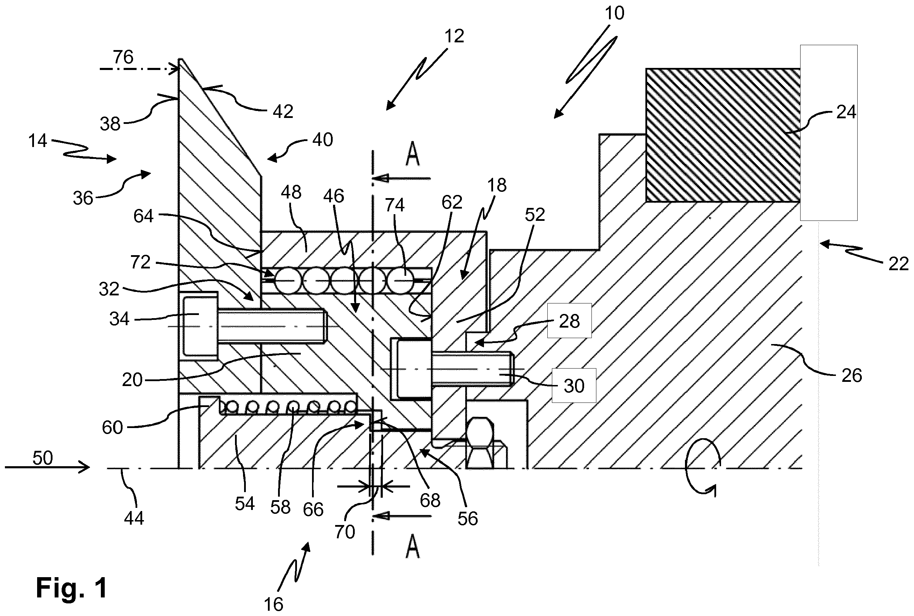

Die **Figur 1** zeigt eine Werkzeugmaschine **10** für die Erfindung im Längsschnitt.

Die Werkzeugmaschine 10 umfasst ein Bearbeitungssystem **12** mit einem Werkzeug **14** und mit einer Federhalterung **16.** Die Federhalterung 16 weist einen Grundkörper **18** und einen Aufnahmekörper **20** auf. Eine Werkzeugspindel **22** der Werkzeugmaschine 10 umfasst ein Spindelgehäuse **24** und eine Welle **26**, die in nicht näher dargestellter Weise im Spindelgehäuse 26 gelagert und gegenüber dem Spindelgehäuse 24 rotierbar (motorisch antreibbar) ist.

Der Grundköper 18 der Federhalterung 16 ist mit seiner Wellenaufnahme **28** an der Welle 26 der Werkzeugspindel 22 in einer feststehenden Drehstellung befestigt. Hier sind der Grundkörper 18 und die Welle 26 mittels Schrauben **30** verbunden, so dass sie keine Relativbewegung zueinander ausführen können.

Der Aufnahmekörper 20 der Federhalterung 16 weist eine Werkzeugaufnahme **32** auf, an der das Werkzeug 14 in einer feststehenden Drehstellung unmittelbar befestigt ist. Hier sind das Werkzeug 14 und der Aufnahmekörper 20 über Schrauben **34** verbunden, so dass sie keine Relativbewegung zueinander ausführen können.

Das Werkzeug 14 ist als ein Doppelwerkzeug ausgebildet. An einer Werkzeugvorderseite **36** des Werkzeugs 14 (der Federhalterung 16 und der Werkzeugspindel 22 abgewandt) ist eine erste Bearbeitungszone **38** für eine erste Bearbeitungsart ausgebildet. Die erste Bearbeitungszone 38 weist hier nicht näher dargestellte erste Schneiden zum Wälzschälanfasen auf. An einer Werkzeugrückseite **40** des Werkzeugs 14 (der Federhalterung 16 und der Werkzeugspindel 22 zugewandt) ist eine zweite Bearbeitungszone **42** für eine zweite Bearbeitungsart ausgebildet. Die zweite Bearbeitungszone 42 weist hier nicht näher dargestellte zweite Schneiden zum Feilen auf.

Das Werkzeug 14 ist zur Bearbeitung eines Werkstücks (nicht dargestellt) um eine Werkzeugachse **44** rotierbar. Zum Antreiben des Werkzeugs 14 wird die Welle 26 im Spindelgehäuse 24 gedreht. Die Rotation der Welle 26 wird über die Federhalterung 16 auf das Werkzeug 14 übertragen. Der Aufnahmekörper 20 der Federhalterung 16 ist dazu drehstarr (unverdrehbar) und in zur Werkzeugachse 44 radialer Richtung unverschieblich am Grundkörper 18 gelagert.

Der Grundkörper 18 ist hier im Wesentlichen topfförmig ausgebildet und weist eine Rücknehmung **46** auf, in die der Aufnahmekörper 20 eingesetzt ist. Die Rücknehmung 46 wird in radialer Richtung durch einen Mantelabschnitt **48** begrenzt. In einer parallel zu der Werkzeugachse 44 verlaufenden Hauptrichtung 50 wird die Rücknehmung 46 durch einen Bodenabschnitt **52** begrenzt. Der Bodenabschnitt 52 ist hier durchbrochen ausgebildet, um die Schrauben 30 durchführen zu können, und um einen Dorn **54** des Grundkörpers 18 aufzunehmen. Der Dorn 54 ist hier an dem Bodenabschnitt 52 verschraubt.

Der Dorn 54 durchragt eine zentrale Ausnehmung **56** des Aufnahmekörpers 20. Zwischen dem Dorn 54 und dem Aufnahmekörper 20 ist ein Federelement **58** angeordnet. Das Federelement 58 ist hier durch eine zylindrische Schraubenfeder, die als Druckfeder wirkt, gebildet. Das Federelement 58 stützt sich einerseits an einem radialen Kragen **60** des Dorns 54 ab. Anderenends stützt sich das Federelement 58 an dem Aufnahmekörper 20 ab.

Durch das Federelement 58 ist der Aufnahmekörper 20 gegen einen Hauptanschlag **62** an dem Grundkörper 18 vorgespannt. Mit anderen Worten drückt das Federelement 58 den Aufnahmekörper 20 gegen den Hauptanschlag 62 des Grundkörpers 18. Der Hauptanschlag 62 ist hier an dem Bodenabschnitt 52 des Grundkörpers 18 ausgebildet. In seinem am Hauptanschlag 62 anliegenden Zustand ist der Aufnahmekörper 20 hier vollständig innerhalb der Rücknehmung 46 des Grundkörpers 18 angeordnet, d.h. der Aufnahmekörper 20 ragt entgegen der Hauptrichtung 50 nicht über eine freie Stirnfläche **64** der Mantelfläche 48 hinaus.

Der Aufnahmekörper 20 kann gegen die Wirkung des Federelements 58, d.h. entgegen der Hauptrichtung 50, von dem Hauptanschlag 62 abgehoben werden. An dem Dorn 54 ist hier an einer radialen Schulter **66** ein Hilfsanschlag **68** ausgebildet. Der Hilfsanschlag 68 begrenzt einen Ausrückweg **70** des Aufnahmekörpers 20 von dem Hauptanschlag 62 weg. Das Werkzeug 14 ist federnd "in der Nabe" gelagert.

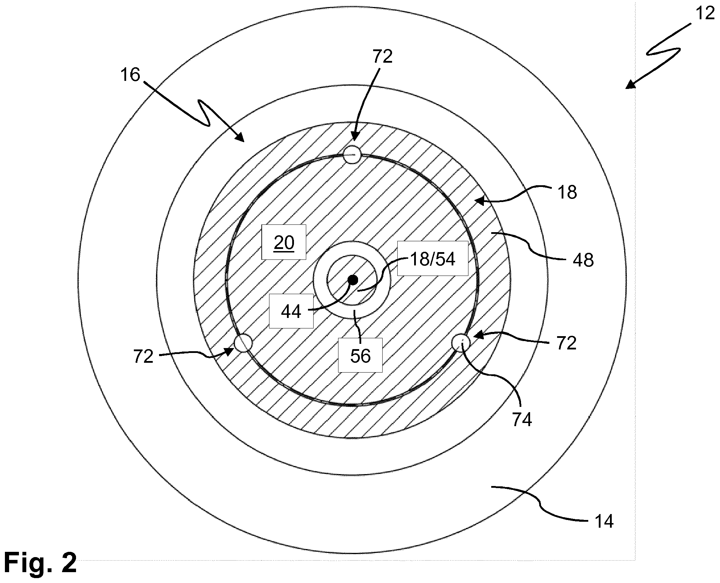

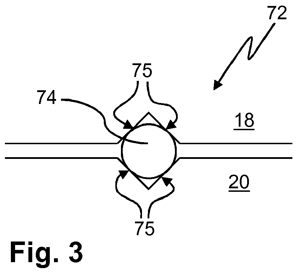

Zur Führung des Aufnahmekörpers 20 an dem Grundkörper 18 sind hier drei Wälzkörperreihen **72** vorgesehen, wie insbesondere aus **Figur 2** hervorgeht. Die Wälzkörperreihen 72 erlauben es, den Aufnahmekörper 20 entlang der Werkzeugachse 44 reibungsarm und spielfrei gegenüber dem Grundkörper 18 zwischen dem Hauptanschlag 62 und dem Hilfsanschlag 68 zu verschieben. Die Wälzkörperreihen 72 umfassen jeweils mehrere Wälzkörper **74**, hier je fünf Lagerkugeln. Die Wälzkörperreihen 72 sind parallel zu der Werkzeugachse 44 ausgerichtet. Die Wälzkörper 74 der Wälzkörperreihen 72 ragen hier jeweils in zur Werkzeugachse 44 radialer Richtung in den Aufnahmekörper 20 und in den Mantelabschnitt 48 des Grundkörpers 18 hinein, um ein Verdrehen des Aufnahmekörpers 20 gegen den Grundkörper 18 um die Werkzeugachse 44 zu verhindern. Um die Steifigkeit der Führung durch die Wälzkörperreihen 72 zu erhöhen, können die Wälzkörper 74 zwischen dem Aufnahmekörper 20 und dem Grundkörper 18 verspannt sein. Falls gewünscht können, wie in der Variante von **Figur 3** dargestellt, für jede Wälzkörperreihe 72 jeweils zwei Lauflächen **75** für die Wälzkörper 74 an dem Grundkörper 18 und dem Aufnahmekörper 20 ausgebildet sein, wobei sich die Laufflächen 75 an dem Grundkörper 18 und an dem Aufnahmekörper 20 jeweils paarweise gegenüber liegen. Die Laufflächen 75 können wie dargestellt eben ausgebildet sein (Laufebenen). Alternativ ist es auch möglich, die Laufflächen 75 in der Ebene senkrecht zur Erstreckungsrichtung der Wälzkörperreihe 72 bzw. senkrecht zur Werkzeugachse, also in Fig. 3 in der Zeichenebene, gekrümmt auszubilden (Laufbahnen), wobei der Krümmungsradius der Laufbahnen größer ist als der Krümmungsradius der Wälzkörper 74 (nicht näher dargestellt).

In einem ersten Schritt des erfindungsgemäßen Verfahrens wird ein Werkstück (nicht dargestellt) mit der ersten Bearbeitungszone 38 an der Werkzeugvorderseite 36 bearbeitet; hier werden Zahnkanten eines verzahnten Werkstücks im Wälzschälanfasverfahren angefast. Bei der Bearbeitung des Werkstücks mit der ersten Bearbeitungszone 38 wirkt eine erste Komponente **76** einer ersten Prozesskraft in der Hauptrichtung 50 auf das Werkzeug 14 (siehe Fig. 1). Die erste Komponente 76 der ersten Prozesskraft drückt den Aufnahmekörper 20 zusätzlich zu dem Federelement 58 gegen den Hauptanschlag 62.

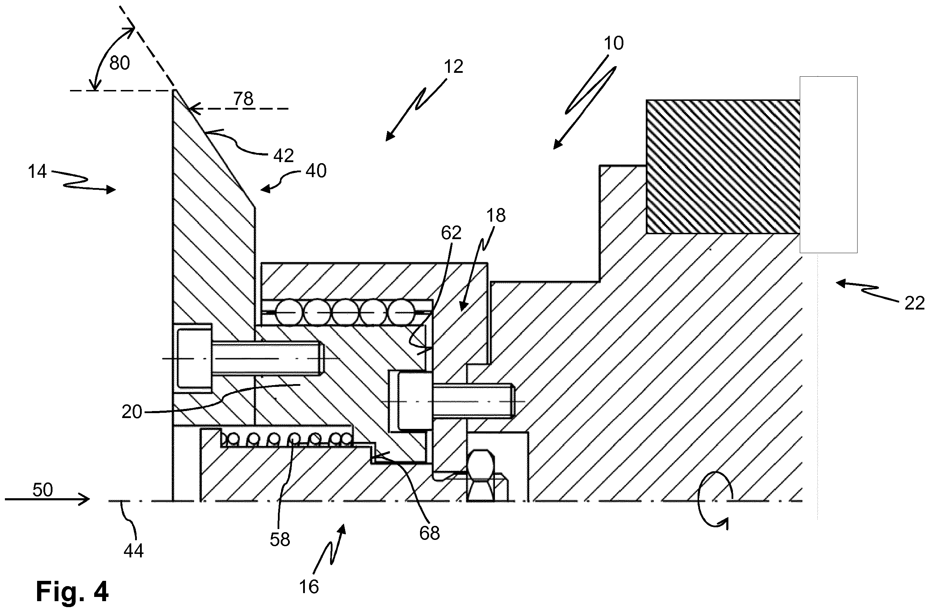

In einem zweiten Schritt wird die zweite Bearbeitungszone 42 an der Werkzeugrückseite 40 an das Werkstück angelegt. Hier werden im zweiten Schritt Grate abgefeilt, die bei der Bearbeitung im ersten Schritt an den Zahnkanten entstanden sind. Zur Bearbeitung mit der zweiten Bearbeitungszone 42 wird das Werkzeug 14 derart auf das Werkstück zugestellt, dass der Aufnahmekörper 20 von dem Hauptanschlag 62 abgehoben ist, wie es in **Figur 4** dargestellt ist. Die zweite Bearbeitungszone 42 ist hier an der der Werkzeugspindel 22 und der Federhalterung 16 zugewandten Werkzeugrückseite 40 ausgebildet, so dass der Aufnahmekörper 20 von dem Werkzeug 14 von dem Hauptanschlag 62 weg gezogen wird. Die Zustellung erfolgt ferner derart, dass der Aufnahmekörper 20 auch nicht an dem Hilfsanschlag 68 anliegt. Ohne den Kontakt mit dem Werkstück wäre der Aufnahmekörper 20 in dieser Position sowohl in der Hauptrichtung 50 als auch gegen die Hauptrichtung 50 gegenüber dem Grundkörper 18 bewegbar. Durch das Abheben des Aufnahmekörpers 20 von dem Hauptanschlag 62 wird das Federelement 58 im Vergleich zum in Fig. 1 gezeigten Zustand stärker komprimiert, wie es in Fig. 3 am aufnahmekörperseitigen Ende des Federelements 58 durch Annäherung der Federwindungen schematisch angedeutet ist.

Bei der Bearbeitung mit der zweiten Bearbeitungszone 42 wirkt eine zweite Komponente **78** einer zweiten Prozesskraft entgegen der Hauptrichtung 50 auf das Werkzeug 14. Es versteht sich, dass die erste Prozesskraft (siehe Fig. 1) und die zweite Prozesskraft neben der ersten Komponente 76 bzw. der zweiten Komponente 78 grundsätzlich noch weitere Komponenten haben können, die in zu der Werkzeugachse 44 radialen Richtungen wirken. Auf diese weiteren Komponenten kommt es für die Darstellung der Erfindung jedoch nicht an; sie sind daher nicht eingezeichnet. Man beachte, dass die zweite Komponente 78 der zweiten Prozesskraft nicht senkrecht auf der zweiten Bearbeitungszone 42 steht. Die zweite Bearbeitungszone 42 ist hier um einen Winkel **80** von ca. 55° gegen die Werkzeugachse 44 geneigt.

Da der Aufnahmekörper 20 bei der Bearbeitung mit der zweiten Bearbeitungszone 42 weder an dem Hauptanschlag 62 noch an dem Hilfsanschlag 68 anliegt, entspricht die zweite Komponente 78 der zweiten Prozesskraft betragsmäßig der in der Hauptrichtung 50 auf den Aufnahmekörper 20 wirkenden Federkraft des Federelements 58. Mit anderen Worten wird das Werkzeug 14 bei der Bearbeitung mit der zweiten Bearbeitungszone 42 von der Federkraft des Federelements 58 gegen das Werkstück gepresst. Die Größe (Betrag) der zweiten Komponente 78 der zweiten Prozesskraft kann somit durch geeignete Wahl der Federsteifigkeit und der Vorspannung des Federelements 58 eingestellt werden.

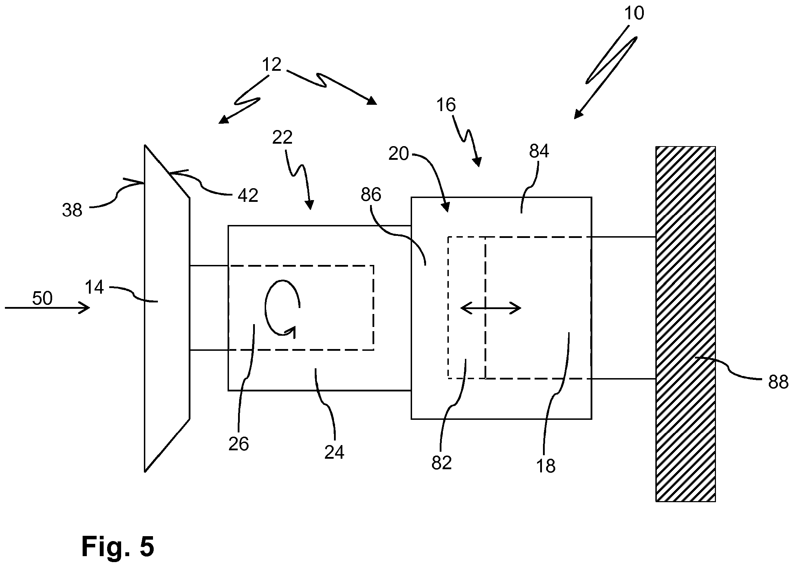

**Figur 5** zeigt eine weitere Bauform einer Werkzeugmaschine 10 mit einem Bearbeitungssystem 12 für die Erfindung. Ein als Doppelwerkzeug ausgeführtes Werkzeug 14 ist drehfest an einer Welle 26 einer Werkzeugspindel 22 befestigt. Die Welle 26 ist in einem Spindelgehäuse 24 der Werkzeugspindel 22 drehbar gelagert und motorisch antreibbar.

Das Spindelgehäuse 24 ist an einem Aufnahmekörper 20 einer Federhalterung 16 in einer feststehenden Drehstellung befestigt. Der Aufnahmekörper 20 ist im Wesentlichen topfförmig ausgebildet, wobei eine Rücknehmung **82** von einem Mantelabschnitt **84** und einem Bodenabschnitt **86** begrenzt wird. In der Rücknehmung 82 ist ein Grundkörper 18 der Federhalterung 16 axial verschieblich geführt.

Der Grundkörper 18 ist an einem Werkzeugträger **88** der Werkzeugmaschine 10 befestigt. Der Werkzeugträger 88 ist in nicht näher dargestellter Weise motorisch im Raum verschieblich und schwenkbar.

Zusammenfassend betrifft die Erfindung ein Verfahren zur Bearbeitung eines Werkstücks mit einem Bearbeitungssystem 12 und eine Verwendung eines Bearbeitungssystems 12 gemäß den Ansprüchen 1 und 3, mit dem Bearbeitungssystem 12 umfassend ein rotierbares Werkzeug 14 mit einer ersten Bearbeitungszone 38, die so an dem Werkzeug 14 ausgerichtet ist, dass eine auf das Werkzeug 14 wirkende erste Prozesskraft der ersten Bearbeitungsart eine erste Komponente 76 aufweist, die parallel zu einer Werkzeugachse 44 in einer Hauptrichtung 50 wirkt, wobei weiterhin vorgesehen ist, dass das Werkzeug 14 ein Doppelwerkzeug ist mit einer zweiten Bearbeitungszone 42, die so an dem Werkzeug 14 ausgerichtet ist, dass eine auf das Werkzeug 14 wirkende zweite Prozesskraft der zweiten Bearbeitungsart eine zweite Komponente 78 aufweist, die parallel zu der Werkzeugachse 44 entgegen der Hauptrichtung 50 wirkt, dass das Bearbeitungssystem 12 weiterhin eine Federhalterung 16 mit einem Grundkörper 18 und einem Aufnahmekörper 20 umfasst, dass das Werkzeug 14 an dem Aufnahmekörper 20 der Federhalterung 16 befestigt ist, dass der Grundkörper 18 und der Aufnahmekörper 20 entlang der Werkzeugachse 44 gegeneinander verschieblich sind, wobei ein Hauptanschlag 62 an dem Grundkörper 18 ein Verschieben des Aufnahmekörpers 20 gegen den Grundkörper 18 in der Hauptrichtung 50 begrenzt, und dass der Aufnahmekörper 20 von einem Federelement 58 der Federhalterung 16 gegen den Hauptanschlag 62 vorgespannt ist und entgegen der Federkraft des Federelements 58 von dem Hauptanschlag 62 entgegen der Hauptrichtung 50 abhebbar ist.

### Bezugszeichenliste

Werkzeugmaschine **10**
Bearbeitungssystem **12**
Werkzeug **14**
Federhalterung **16**
Grundkörper **18**
Aufnahmekörper **20**
Werkzeugspindel **22**
Spindelgehäuse **24**
Welle **26**
Wellenaufnahme **28**
Schrauben **30**
Werkzeugaufnahme **32**
Schrauben **34**
Werkzeugvorderseite **36**
erste Bearbeitungszone **38**
Werkzeugrückseite **40**
zweite Bearbeitungszone **42**
Werkzeugachse **44**
Rücknehmung **46**
Mantelabschnitt **48**
Hauptrichtung **50**
Bodenabschnitt **52**
Dorn **54**
Ausnehmung **56**
Federelement **58**
radialer Kragen **60**
Hauptanschlag **62**
Stirnfläche **64**
radiale Schulter **66**
Hilfsanschlag **68**
Ausrückweg **70**
Wälzkörperreihen **72**
Wälzkörper **74**
Laufflächen **75**
erste Komponente **76** einer ersten Prozesskraft
zweite Komponente **78** einer zweiten Prozesskraft
Winkel **80**
Rücknehmung **82**
Mantelabschnitt **84**
Bodenabschnitt **86**
Werkzeugträger **88**

## Patentansprüche

1. Verfahren zur Bearbeitung eines Werkstücks mit einem Bearbeitungssystem (12),
mit dem Bearbeitungssystem (12) umfassend
ein um eine Werkzeugachse (44) rotierbares Werkzeug (14), das eine erste Bearbeitungszone (38) für eine erste Bearbeitungsart aufweist, wobei die erste Bearbeitungszone (38) so an dem Werkzeug (14) ausgerichtet ist, dass bei einer Bearbeitung eines Werkstücks mit der ersten Bearbeitungszone (38) eine auf das Werkzeug (14) wirkende erste Prozesskraft der ersten Bearbeitungsart eine erste Komponente (76) aufweist, die parallel zu der Werkzeugachse (44) in einer Hauptrichtung (50) wirkt,
wobei das Werkzeug (14) als ein Doppelwerkzeug ausgebildet ist, das weiterhin eine zweite Bearbeitungszone (42) für eine zweite Bearbeitungsart aufweist,
wobei die zweite Bearbeitungszone (42) so an dem Werkzeug (14) ausgerichtet ist, dass bei einer Bearbeitung eines Werkstücks mit der zweiten Bearbeitungszone (42) eine auf das Werkzeug (14) wirkende zweite Prozesskraft der zweiten Bearbeitungsart eine zweite Komponente (78) aufweist, die parallel zu der Werkzeugachse (44) entgegen der Hauptrichtung (50) wirkt,
wobei das Bearbeitungssystem (12) weiterhin eine Federhalterung (16) umfasst,
wobei die Federhalterung (16) einen Grundkörper (18) und einen Aufnahmekörper (20) aufweist,
wobei das Werkzeug (14) unmittelbar oder mittelbar an dem Aufnahmekörper (20) der Federhalterung (16) befestigt ist,
wobei der Grundkörper (18) und der Aufnahmekörper (20) entlang der Werkzeugachse (44) gegeneinander verschieblich sind,
wobei ein Hauptanschlag (62) an dem Grundkörper (18) vorgesehen ist, der ein Verschieben des Aufnahmekörpers (20) gegen den Grundkörper (18) in der Hauptrichtung (50) begrenzt,
und wobei der Aufnahmekörper (20) von einem Federelement (58) der Federhalterung (16) gegen den Hauptanschlag (62) vorgespannt ist und entgegen der Federkraft des Federelements (58) von dem Hauptanschlag (62) entgegen der Hauptrichtung (50) abhebbar ist,
**dadurch gekennzeichnet,**
**dass** in einem ersten Schritt das Werkstück mit der ersten Bearbeitungszone (38) bearbeitet wird, wobei die erste Komponente (76) der ersten Prozesskraft der ersten Bearbeitungsart den Aufnahmekörper (20) zusätzlich zu der Federkraft gegen den Hauptanschlag (62) des Grundkörpers (18) presst,
und **dass** in einem zweiten Schritt das Werkstück mit der zweiten Bearbeitungszone (42) bearbeitet wird, wobei der Aufnahmekörper (20) von dem Hauptanschlag (62) des Grundkörpers (18) abgehoben ist, so dass das Werkzeug (14) von der Federkraft des Federelements (58) gegen das Werkstück gepresst wird.

2. Verfahren nach Anspruch 1, **dadurch gekennzeichnet, dass** die erste Bearbeitungsart Wälzschälanfasen ist, und dass die zweite Bearbeitungsart Feilen ist.

3. Verwendung eines Bearbeitungssystems (12),
mit dem Bearbeitungssystem (12) umfassend
ein um eine Werkzeugachse (44) rotierbares Werkzeug (14), das eine erste Bearbeitungszone (38) für eine erste Bearbeitungsart aufweist, wobei die erste Bearbeitungszone (38) so an dem Werkzeug (14) ausgerichtet ist, dass bei einer Bearbeitung eines Werkstücks mit der ersten Bearbeitungszone (38) eine auf das Werkzeug (14) wirkende erste Prozesskraft der ersten Bearbeitungsart eine erste Komponente (76) aufweist, die parallel zu der Werkzeugachse (44) in einer Hauptrichtung (50) wirkt,
wobei das Werkzeug (14) als ein Doppelwerkzeug ausgebildet ist, das weiterhin eine zweite Bearbeitungszone (42) für eine zweite Bearbeitungsart aufweist,
wobei die zweite Bearbeitungszone (42) so an dem Werkzeug (14) ausgerichtet ist, dass bei einer Bearbeitung eines Werkstücks mit der zweiten Bearbeitungszone (42) eine auf das Werkzeug (14) wirkende zweite Prozesskraft der zweiten Bearbeitungsart eine zweite Komponente (78) aufweist, die parallel zu der Werkzeugachse (44) entgegen der Hauptrichtung (50) wirkt,
wobei das Bearbeitungssystem (12) weiterhin eine Federhalterung (16) umfasst,
wobei die Federhalterung (16) einen Grundkörper (18) und einen Aufnahmekörper (20) aufweist,
dass das Werkzeug (14) unmittelbar oder mittelbar an dem Aufnahmekörper (20) der Federhalterung (16) befestigt ist,
wobei der Grundkörper (18) und der Aufnahmekörper (20) entlang der Werkzeugachse (44) gegeneinander verschieblich sind,
dass ein Hauptanschlag (62) an dem Grundkörper (18) vorgesehen ist, wobei ein Verschieben des Aufnahmekörpers (20) gegen den Grundkörper (18) in der Hauptrichtung (50) begrenzt,
und wobei der Aufnahmekörper (20) von einem Federelement (58) der Federhalterung (16) gegen den Hauptanschlag (62) vorgespannt ist und entgegen der Federkraft des Federelements (58) von dem Hauptanschlag (62) entgegen der Hauptrichtung (50) abhebbar ist,
**dadurch gekennzeichnet, dass** das Bearbeitungssystem (12)
in einem Verfahren nach Anspruch 1 oder 2 verwendet wird.

4. Verwendung eines Bearbeitungssystem (12) nach Anspruch 3, **dadurch gekennzeichnet,**
**dass** die erste Bearbeitungszone (38) an einer Werkzeugvorderseite (36) ausgebildet ist, so dass bei einer Bearbeitung eines Werkstücks mit der ersten Bearbeitungszone (38) der Aufnahmekörper (20) von dem Werkzeug (14) zu dem Hauptanschlag (62) hin gedrückt wird,
und **dass** die zweite Bearbeitungszone (42) an einer Werkzeugrückseite (40) ausgebildet ist, so dass bei einer Bearbeitung eines Werkstücks mit der zweiten Bearbeitungszone (42) der Aufnahmekörper (20) von dem Werkzeug (14) von dem Hauptanschlag (62) weg gezogen wird.

5. Verwendung eines Bearbeitungssystem (12) nach Anspruch 3 oder 4 **dadurch gekennzeichnet, dass** ein Hilfsanschlag (68) vorgesehen ist, der einen Ausrückweg (70) des Aufnahmekörpers (20) von dem Hauptanschlag (62) des Grundkörpers (18) weg begrenzt.

6. Verwendung eines Bearbeitungssystem (12) nach einem der Ansprüche 3 bis 5, **dadurch gekennzeichnet, dass** die erste Bearbeitungszone (38) erste Schneiden zum Wälzschälanfasen aufweist, und dass die zweite Bearbeitungszone (42) zweite Schneiden zum Feilen aufweist.

7. Verwendung eines Bearbeitungssystem (12) nach einem der Ansprüche 3 bis 6, **dadurch gekennzeichnet, dass** wenigstens drei geradlinige Wälzkörperreihen (72) mit je einer Mehrzahl von Wälzkörpern (74), insbesondere Lagerkugeln, vorgesehen sind, um den Aufnahmekörper (20) an dem Grundkörper (18) zu führen.

8. Verwendung eines Bearbeitungssystem (12) nach Anspruch 7, **dadurch gekennzeichnet, dass** für jede der Wälzkörperreihen (72) an dem Grundkörper (18) und an dem Aufnahmekörper (20) jeweils zwei Laufflächen (75) ausgebildet sind.

9. Verwendung eines Bearbeitungssystems (12) nach einem der Ansprüche 3 bis 8, **dadurch gekennzeichnet, dass** das Werkzeug (14) in einer feststehenden Drehstellung an dem Aufnahmekörper (20) befestigt ist.

10. Verwendung eines Bearbeitungssystems (12) nach einem der Ansprüche 3 bis 9,
wobei der Aufnahmekörper (20) eine Werkzeugaufnahme (32) zur Befestigung eines Werkzeugs (14) an dem Aufnahmekörper (20) aufweist,
und wobei der Grundkörper (18) eine Wellenaufnahme (28) zur Befestigung des Grundkörpers (18) an einer Welle (26) einer Werkzeugspindel (22) aufweist.

11. Verwendung eines Bearbeitungssystems (12) nach Anspruch 10, **dadurch gekennzeichnet, dass** der Grundkörper (18) der Federhalterung (16) eine Rücknehmung (46) aufweist, die in einer zur Werkzeugachse (44) radialen Richtung von einem Mantelabschnitt (48) begrenzt wird, und die in der Hauptrichtung (50) zumindest teilweise von einem Bodenabschnitt (52) begrenzt wird, und dass der Aufnahmekörper (20) der Federhalterung (16) in die Rücknehmung (46) des Grundkörpers (18) eingesetzt ist.

12. Verwendung eines Bearbeitungssystems (12) nach Anspruch 10 oder 11, **dadurch gekennzeichnet, dass** der Grundkörper (18) der Federhalterung (16) einen Dorn (54) umfasst, dass der Dorn (54) eine, insbesondere zentrale, Ausnehmung (56) des Aufnahmekörpers (20) der Federhalterung (16) durchragt, und dass das Federelement (58) sich an dem Dorn (54) und an dem Aufnahmekörper (20) abstützt.

13. Verwendung eines Bearbeitungssystems (12) nach Anspruch 12, **dadurch gekennzeichnet, dass** an dem Dorn (54) ein Hilfsanschlag (68) ausgebildet ist, der einen Ausrückweg (70) des Aufnahmekörpers (20) von dem Hauptanschlag (62) des Grundkörpers (18) weg begrenzt.

14. Verwendung eines Bearbeitungssystems (12) nach Anspruch 10, **dadurch gekennzeichnet, dass** der Aufnahmekörper (20) der Federhalterung (16) eine Rücknehmung (82) aufweist, die in einer zur Werkzeugachse (44) radialen Richtung von einem Mantelabschnitt (84) begrenzt wird, und die entgegen der Hauptrichtung (50) zumindest teilweise von einem Bodenabschnitt (86) begrenzt wird, und dass der Grundkörper (18) der Federhalterung (16) in die Rücknehmung des Aufnahmekörpers (20) eingesetzt ist.

15. Verwendung eines Bearbeitungssystems (12) nach Anspruch 10 oder 14, **dadurch gekennzeichnet, dass** der Aufnahmekörper (20) der Federhalterung (16) einen Dorn umfasst, dass der Dorn eine, insbesondere zentrale, Ausnehmung des Grundkörpers (18) der Federhalterung (16) durchragt, und dass das Federelement (58) sich an dem Dorn und an dem Grundkörper (18) abstützt.

16. Verwendung eines Bearbeitungssystems (12) nach einem der Ansprüche 10 bis 15, **dadurch gekennzeichnet, dass** wenigstens drei geradlinige Wälzkörperreihen (72) mit je einer Mehrzahl von Wälzkörpern (74), insbesondere Lagerkugeln, vorgesehen sind, um den Aufnahmekörper (20) an dem Grundkörper (18) zu führen.

17. Verwendung eines Bearbeitungssystems (12) nach Anspruch 16, **dadurch gekennzeichnet, dass** für jede der Wälzkörperreihen (72) an dem Grundkörper (18) und an dem Aufnahmekörper (20) jeweils zwei Laufflächen (75) ausgebildet sind.

## Claims

1. Method for machining a workpiece using a machining system (12),
the machining system (12) comprising a tool (14) which can be rotated about a tool axis (44) and has a first machining zone (38) for a first type of machining,
wherein the first machining zone (38) is oriented on the tool (14) such that, when a workpiece is being machined by way of the first machining zone (38), a first process force which is related to the first type of machining and acts on the tool (14) has a first component (76), which acts parallel to the tool axis (44) in a main direction (50),
wherein the tool (14) is designed in the form of a double tool, which also has a second machining zone (42) for a second type of machining,
wherein the second machining zone (42) is oriented on the tool (14) such that, when a workpiece is being machined by way of the second machining zone (42), a second process force which is related to the second type of machining and acts on the tool (14) has a second component (78), which acts parallel to the tool axis (44) counter to the main direction (50),
wherein the machining system (12) also comprises a spring retainer (16),
wherein the spring retainer (16) has a main body (18) and a holding body (20),
wherein the tool (14) is fastened directly or indirectly on the holding body (20) of the spring retainer (16),
wherein the main body (18) and the holding body (20) are displaceable in relation to one another along the tool axis (44),
wherein a main stop (62) is provided on the main body (18) and delimits displacement of the holding body (20) towards the main body (18) in the main direction (50),
and wherein the holding body (20) is prestressed against the main stop (62) by a spring element (58) of the spring retainer (16) and can be lifted off from the main stop (62), in a direction counter to the main direction (50), counter to the spring force of the spring element (58),
**characterized**
**in that**, in a first step, the workpiece is machined by way of the first machining zone (38), wherein the first component (76) of the first process force related to the first type of machining presses the holding body (20), in addition to the spring force, against the main stop (62) of the main body (18), and in that, in a second step, the workpiece is machined by way of the second machining zone (42), wherein the holding body (20) is lifted off from the main stop (62) of the main body (18), so that the tool (14) is pressed against the workpiece by the spring force of the spring element (58).

2. Method according to Claim 1, **characterized in that** the first type of machining is chamfer skiving, and **in that** the second type of machining is filing.

3. Use of a machining system (12),
the machining system (12) comprising
a tool (14) which can be rotated about a tool axis (44) and has a first machining zone (38) for a first type of machining,
wherein the first machining zone (38) is oriented on the tool (14) such that, when a workpiece is being machined by way of the first machining zone (38), a first process force which is related to the first type of machining and acts on the tool (14) has a first component (76), which acts parallel to the tool axis (44) in a main direction (50),
wherein the tool (14) is designed in the form of a double tool, which also has a second machining zone (42) for a second type of machining,
wherein the second machining zone (42) is oriented on the tool (14) such that, when a workpiece is being machined by way of the second machining zone (42), a second process force which is related to the second type of machining and acts on the tool (14) has a second component (78), which acts parallel to the tool axis (44) counter to the main direction (50),
wherein the machining system (12) also comprises a spring retainer (16),
wherein the spring retainer (16) has a main body (18) and a holding body (20),
wherein the tool (14) is fastened directly or indirectly on the holding body (20) of the spring retainer (16),
wherein the main body (18) and the holding body (20) are displaceable in relation to one another along the tool axis (44),
wherein a main stop (62) is provided on the main body (18),
wherein delimits displacement of the holding body (20) towards the main body (18) in the main direction (50),
and wherein the holding body (20) is prestressed against the main stop (62) by a spring element (58) of the spring retainer (16) and can be lifted off from the main stop (62), in a direction counter to the main direction (50), counter to the spring force of the spring element (58),
**characterized in that** the machining system (12) is used in a method according to Claim 1 or 2.

4. Use of a machining system (12) according to Claim 3, **characterized**
**in that** the first machining zone (38) is formed on a front side (36) of the tool, so that, when a workpiece is being machined by way of the first machining zone (38), the holding body (20) is pushed towards the main stop (62) by the tool (14),
and **in that** the second machining zone (42) is formed on a rear side (40) of the tool, so that, when a workpiece is being machined by way of the second machining zone (42), the holding body (20) is pulled away from the main stop (62) by the tool (14).

5. Use of a machining system (12) according to Claim 3 or 4, **characterized by** the provision of an auxiliary stop (68), which delimits a yielding path (70) of the holding body (20) away from the main stop (62) of the main body (18).

6. Use of a machining system (12) according to one of Claims 3 to 5, **characterized in that** the first machining zone (38) has first cutting edges for chamfer skiving, and **in that** the second machining zone (42) has second cutting edges for filing.

7. Use of a machining system (12) according to one of Claims 3 to 6, **characterized by** the provision of at least three straight-line rolling-body rows (72) each with a plurality of rolling bodies (74), in particular ball bearings, in order to guide the holding body (20) on the main body (18).

8. Use of a machining system (12) according to Claim 7, **characterized in that** for each of the rolling-body rows (72), in each case two running surfaces (75) are formed on the main body (18) and on the holding body (20).

9. Use of a machining system (12) according to one of Claims 3 to 8, **characterized in that** the tool (14) is fastened in a fixed rotary position on the holding body (20).

10. Use of a machining system (12) according to one of Claims 3 to 9, wherein the holding body (20) has a tool mount (32) for fastening a tool (14) on the holding body (20),
and wherein the main body (18) has a shaft mount (28) for fastening the main body (18) on a shaft (26) of a tool spindle (22).

11. Use of a machining system (12) according to Claim 10, **characterized in that** the main body (18) of the spring retainer (16) has a recess (46), which is delimited by a lateral-surface portion (48) in a radial direction in relation to the tool axis (44), and which is delimited at least in part by a base portion (52) in the main direction (50), and **in that** the holding body (20) of the spring retainer (16) is inserted into the recess (46) of the main body (18) .

12. Use of a machining system (12) according to Claim 10 or 11, **characterized in that** the main body (18) of the spring retainer (16) comprises a mandrel (54), **in that** the mandrel (54) projects through a through-passage (56), in particular central through-passage (56), of the holding body (20) of the spring retainer (16), and **in that** the spring element (58) is supported on the mandrel (54) and on the holding body (20).

13. Use of a machining system (12) according to Claim 12, **characterized by** the formation, on the mandrel (54), of an auxiliary stop (68), which delimits a yielding path (70) of the holding body (20) away from the main stop (62) of the main body (18).

14. Use of a machining system (12) according to Claim 10, **characterized in that** the holding body (20) of the spring retainer (16) has a recess (82), which is delimited by a lateral-surface portion (84) in a radial direction in relation to the tool axis (44), and which is delimited at least in part by a base portion (86) counter to the main direction (50), and **in that** the main body (18) of the spring retainer (16) is inserted into the recess of the holding body (20) .

15. Use of a machining system (12) according to Claim 10 or 14, **characterized in that** the holding body (20) of the spring retainer (16) comprises a mandrel, **in that** the mandrel projects through a through-passage, in particular central through-passage, of the main body (18) of the spring retainer (16), and **in that** the spring element (58) is supported on the mandrel and on the main body (18) .

16. Use of a machining system (12) according to one of Claims 10 to 15, **characterized by** the provision of at least three straight-line rolling-body rows (72) each with a plurality of rolling bodies (74), in particular ball bearings, in order to guide the holding body (20) on the main body (18).

17. Use of a machining system (12) according to Claim 16, **characterized in that** for each of the rolling-body rows (72), in each case two running surfaces (75) are formed on the main body (18) and on the holding body (20).

## Revendications

1. Procédé d'usinage d'une pièce à l'aide d'un système d'usinage (12),
lequel système d'usinage (12) comprend
un outil (14), apte à tourner autour d'un axe (44) et muni d'une première zone d'usinage (38) dévolue à un premier mode d'usinage, la première zone d'usinage (38) étant orientée sur l'outil (14) de telle sorte que, lors d'un usinage d'une pièce à l'aide de ladite première zone d'usinage (38), une première force de processus dudit premier mode d'usinage, agissant sur l'outil (14), présente une première composante (76) agissant dans une direction principale (50), parallèlement à l'axe (44) dudit outil,
lequel outil (14) est réalisé sous la forme d'un outil double doté, en outre, d'une seconde zone d'usinage (42) dévolue à un second mode d'usinage,
laquelle seconde zone d'usinage (42) est orientée sur l'outil (14) de façon telle que, lors d'un usinage d'une pièce à l'aide de ladite seconde zone d'usinage (42), une seconde force de processus dudit second mode d'usinage, agissant sur l'outil (14), présente une seconde composante (78) agissant en sens inverse de la direction principale (50), parallèlement à l'axe (44) dudit outil,
ledit système d'usinage (12) étant par ailleurs pourvu d'un support (16) doué d'élasticité, lequel support (16), doué d'élasticité, comporte un corps de base (18) et un corps de réception (20),
l'outil (14) étant fixé, directement ou indirectement, audit corps de réception (20) du support (16) doué d'élasticité,
le corps de base (18) et le corps de réception (20) pouvant être déplacés l'un par rapport à l'autre le long de l'axe (44) dudit outil,
sachant qu'il est prévu, sur le corps de base (18), une butée principale (62) limitant un déplacement du corps de réception (20) vers ledit corps de base (18), dans la direction principale (50),
et sachant que ledit corps de réception (20) est précontraint contre la butée principale (62), par un élément élastique (58) du support (16) doué d'élasticité, et peut être décollé de ladite butée principale (62) en sens inverse de ladite direction principale (50), en opposition à la force élastique dudit élément élastique (58),
**caractérisé par le fait**
**que**, lors d'une première étape, la pièce est usinée à l'aide de la première zone d'usinage (38), la première composante (76) de la première force de processus du premier mode d'usinage pressant alors le corps de réception (20) contre la butée principale (62) du corps de base (18), en plus de la force élastique ;
et par le fait que, lors d'une seconde étape, ladite pièce est usinée à l'aide de la seconde zone d'usinage (42), ledit corps de réception (20) étant alors décollé de ladite butée principale (62) dudit corps de base (18), de sorte que l'outil (14) est pressé contre ladite pièce par la force élastique de l'élément élastique (58).

2. Procédé selon la revendication 1, **caractérisé par le fait que** le premier mode d'usinage est un chanfreinage par décolletage en développante ; et **par le fait que** le second mode d'usinage est un limage.

3. Utilisation d'un système d'usinage (12),
lequel système d'usinage (12) comprend
un outil (14), apte à tourner autour d'un axe (44) et muni d'une première zone d'usinage (38) dévolue à un premier mode d'usinage, la première zone d'usinage (38) étant orientée sur l'outil (14) de telle sorte que, lors d'un usinage d'une pièce à l'aide de ladite première zone d'usinage (38), une première force de processus dudit premier mode d'usinage, agissant sur l'outil (14), présente une première composante (76) agissant dans une direction principale (50), parallèlement à l'axe (44) dudit outil,
lequel outil (14) est réalisé sous la forme d'un outil double doté, en outre, d'une seconde zone d'usinage (42) dévolue à un second mode d'usinage,
laquelle seconde zone d'usinage (42) est orientée sur l'outil (14) de façon telle que, lors d'un usinage d'une pièce à l'aide de ladite seconde zone d'usinage (42), une seconde force de processus dudit second mode d'usinage, agissant sur l'outil (14), présente une seconde composante (78) agissant en sens inverse de la direction principale (50), parallèlement à l'axe (44) dudit outil,
ledit système d'usinage (12) étant par ailleurs pourvu d'un support (16) doué d'élasticité, lequel support (16), doué d'élasticité, comporte un corps de base (18) et un corps de réception (20),
l'outil (14) étant fixé, directement ou indirectement, audit corps de réception (20) du support (16) doué d'élasticité,
le corps de base (18) et le corps de réception (20) pouvant être déplacés l'un par rapport à l'autre le long de l'axe (44) dudit outil,
sachant qu'il est prévu, sur le corps de base (18), une butée principale (62) limitant un déplacement du corps de réception (20) vers ledit corps de base (18), dans la direction principale (50),
et sachant que ledit corps de réception (20) est précontraint contre la butée principale (62), par un élément élastique (58) du support (16) doué d'élasticité, et peut être décollé de ladite butée principale (62) en sens inverse de ladite direction principale (50), en opposition à la force élastique dudit élément élastique (58),
**caractérisée par le fait que** le système d'usinage (12) est utilisé dans un procédé conforme à la revendication 1 ou 2.

4. Utilisation d'un système d'usinage (12), selon la revendication 3, **caractérisée par le fait que**
la première zone d'usinage (38) est ménagée sur une face antérieure (36) de l'outil de façon telle que, lors d'un usinage d'une pièce à l'aide de ladite première zone d'usinage (38), le corps de réception (20) soit poussé en direction de la butée principale (62), par ledit outil (14) ;
et **par le fait que** la seconde zone d'usinage (42) est ménagée sur une face postérieure (40) dudit outil de façon telle que, lors d'un usinage d'une pièce à l'aide de ladite seconde zone d'usinage (42), ledit corps de réception (20) soit tiré, par ledit outil (14), à l'écart de ladite butée principale (62).

5. Utilisation d'un système d'usinage (12), selon la revendication 3 ou 4, **caractérisée par le fait qu'**il est prévu une butée auxiliaire (68) qui limite un trajet (70) de dégagement du corps de réception (20) à l'écart de la butée principale (62) du corps de base (18).

6. Utilisation d'un système d'usinage (12), selon l'une des revendications 3 à 5, **caractérisée par le fait que** la première zone d'usinage (38) est munie de premiers tranchants affectés au chanfreinage par décolletage en développante ; et **par le fait que** la seconde zone d'usinage (42) est pourvue de seconds tranchants affectés au limage.

7. Utilisation d'un système d'usinage (12), selon l'une des revendications 3 à 6, **caractérisée par** la présence d'au moins trois rangées rectilignes (72) respectivement constituées d'une pluralité de corps de roulement (74), notamment de billes de roulement, en vue de guider le corps de réception (20) sur le corps de base (18).

8. Utilisation d'un système d'usinage (12), selon la revendication 7, **caractérisée par le fait que** deux surfaces de roulement (75) sont respectivement façonnées, sur le corps de base (18) et sur le corps de réception (20), pour chacune des rangées (72) de corps de roulement.

9. Utilisation d'un système d'usinage (12), selon l'une des revendications 3 à 8, **caractérisée par le fait que** l'outil (14) est fixé, sur le corps de réception (20), dans une position stationnaire prise par rotation.

10. Utilisation d'un système d'usinage (12), selon l'une des revendications 3 à 9,
sachant que le corps de réception (20) est nanti d'un logement d'outillage (32) dédié à la fixation d'un outil (14) audit corps de réception (20),
et sachant que le corps de base (18) est muni d'un logement (28) d'arbres, dévolu à la fixation dudit corps de base (18) à un arbre (26) d'une broche (22) porte-outils.

11. Utilisation d'un système d'usinage (12), selon la revendication 10, **caractérisée par le fait que** le corps de base (18) du support (16) doué d'élasticité présente une contre-dépouille (46) qui est délimitée par une zone d'enveloppe (48), dans une direction radiale par rapport à l'axe (44) de l'outil et est délimitée, dans la direction principale (50), au moins en partie par une région inférieure (52) ; et **par le fait que** le corps de réception (20) dudit support (16) doué d'élasticité est inséré dans ladite contre-dépouille (46) dudit corps de base (18).

12. Utilisation d'un système d'usinage (12), selon la revendication 10 ou 11, **caractérisée par le fait que** le corps de base (18) du support (16) doué d'élasticité inclut un mandrin (54) ; **par le fait que** ledit mandrin (54) traverse un évidement (56), notamment central, du corps de réception (20) dudit support (16) doué d'élasticité ; et **par le fait que** l'élément élastique (58) est en appui contre ledit mandrin (54) et contre ledit corps de réception (20).

13. Utilisation d'un système d'usinage (12), selon la revendication 12, **caractérisée par le fait qu'**une butée auxiliaire (68), ménagée sur le mandrin (54), limite un trajet (70) de dégagement du corps de réception (20) à l'écart de la butée principale (62) du corps de base (18).

14. Utilisation d'un système d'usinage (12), selon la revendication 10, **caractérisée par le fait que** le corps de réception (20) du support (16) doué d'élasticité présente une contre-dépouille (82) qui est délimitée par une zone d'enveloppe (84), dans une direction radiale par rapport à l'axe (44) de l'outil et est délimitée, en sens inverse de la direction principale (50), au moins en partie par une région inférieure (86) ; et **par le fait que** le corps de base (18) dudit support (16) doué d'élasticité est inséré dans ladite contre-dépouille dudit corps de réception (20).

15. Utilisation d'un système d'usinage (12), selon la revendication 10 ou 14, **caractérisée par le fait que** le corps de réception (20) du support (16) doué d'élasticité inclut un mandrin ; **par le fait que** ledit mandrin traverse un évidement, notamment central, du corps de base (18) dudit support (16) doué d'élasticité ; et **par le fait que** l'élément élastique (58) est en appui contre ledit mandrin et contre ledit corps de base (18).

16. Utilisation d'un système d'usinage (12), selon l'une des revendications 10 à 15, **caractérisée par** la présence d'au moins trois rangées rectilignes (72) respectivement constituées d'une pluralité de corps de roulement (74), notamment de billes de roulement, en vue de guider le corps de réception (20) sur le corps de base (18).

17. Utilisation d'un système d'usinage (12), selon la revendication 16, **caractérisée par le fait que** deux surfaces de roulement (75) sont respectivement façonnées, sur le corps de base (18) et sur le corps de réception (20), pour chacune des rangées (72) de corps de roulement.
